# EUROPEAN PATENT APPLICATION

(11) **EP 0 824 961 A1**
(43) Date of publication of application: **25.02.1998**
(21) Application number: 96202348.7
(22) Date of filing: 23.08.1996
(51) Int. Cl.: B01J 8/22

(54) **Gas sparger for a suspension reactor and use thereof**

(71) Applicant: SHELL INTERNATIONALE RESEARCH MAATSCHAPPIJ B.V., 2596 HR Den Haag (NL)
(72) Inventor: The designation of the inventor has not yet been filed

(57) **Abstract**

The present invention relates to a gas sparger (31) for feeding gas into the suspension zone of a suspension reactor, which gas sparger (31) comprises a hollow body (32) equipped with a gas inlet (35) and having one or more gas outlet opening(s) (37), and a gas inlet valve body (40) which can be displaced relative to the hollow body (32) by the action of gas supplied through the gas inlet (35) from a closed position to an open position. The invention further relates to a suspension reactor containing at least one gas sparger (31) as described above, and to the use of the said suspension reactor in a process for carrying out an exothermic reaction involving one or more gaseous reactants. Moreover, the present invention relates to a process for the preparation of organic compounds from synthesis gas in the said suspension reactor.

## Description

The present invention relates to a gas sparger for feeding gas in a suspension zone of a suspension reactor. The invention further relates to a suspension reactor and to the use of the suspension reactor in a process for carrying out exothermic reactions. The invention moreover relates to a process for the conversion of synthesis gas into organic compounds.

A suspension zone of a suspension reactor is a zone in which solid particles are kept in suspension in a liquid. The solid particles are usually catalyst particles which, typically, are kept in suspension by upward liquid flow and/or rising gas bubbles which have been introduced into the suspension zone by a gas sparger. Thus, in general, in a suspension reactor a suspension of liquid and solid particles is contacted with a feed gas.

In view of the excellent heat transfer properties, suspension reactors are very suitable for carrying out highly exothermic reactions involving one or more gaseous reactants (the feed gas), such as reactions involving the conversion of synthesis gas, a mixture comprising hydrogen and carbon monoxide, into organic compounds like alkanols and/or hydrocarbons.

One or more gas spargers, typically situated at or near the bottom of the suspension zone, ensure adequate distribution of the feed gas through the suspension zone. Examples of known gas spargers are a porous plate and an arrangement of porous tubes. The pores in the plate or tubes are large enough to ensure adequate passage of gas, but small enough to prevent solid particles from entering the pores. However, significant clogging of pores may occur e.g. due to solid particles attrition or failure of the gas feed supply. Furthermore, the relatively small pores give rise to high pressure drops across the pores.

Other known gas spargers include dynamic gas jets, such as ejector jets and slit jets. Problems associated with such gas spargers include the danger of drainage of liquid/solid suspension from the suspension zone into the gas supply system in case of failure of the gas feed supply. Furthermore, the high local gas velocities being applied in such gas spargers may lead to high solid particles attrition and erosion of internals in the suspension zone.

An overview of known gas spargers has been published in "Bubble Column Reactors" by W.-D. Deckwer, 1992, John Wiley & Sons, pages 9-13.

The gas sparger of the present invention aims to solve problems associated with prior art gas spargers, in particular the problems discussed above.

Therefore, according to the present invention there is provided a gas sparger for feeding gas into the suspension zone of a suspension reactor, which sparger comprises a hollow body equipped with a gas inlet and having one or more gas outlet opening(s), and a gas inlet valve body which can be displaced relative to the hollow body by the action of gas supplied through the gas inlet from a closed position to an open position.

The gas inlet valve body returns to the closed position due to its own weight in the absence of sufficient action of gas, thus preventing drainage of liquid/solid suspension into the gas supply system.

According to a preferred embodiment the hollow body of the gas sparger is equipped with two or more gas outlet openings.

For the purposes of this specification, reference is hereinafter made to gas outlet openings. It is to be understood that this term does not exclude the embodiment in which the hollow body of the gas sparger is equipped with one gas outlet opening.

Typically, the gas outlet openings have a size larger than the average solid particle size, thus in principle allowing drainage of suspension into the gas supply system, in particular the gas inlet. This, however, is prevented by the gas inlet valve body. Preferably, the gas outlet openings have a size which is larger than the size of at least 99% of the solid particles present in the suspension.

According to a more preferred embodiment of the invention, the dimensions of the gas outlet openings are such that, in operation, that is with the gas inlet valve body in the open position, the pressure drop over the gas outlet openings is at least 10%, in particular at least 15%, of the average pressure drop between the bottom and the top of the suspension zone. It has been found that this ensures a homogeneous distribution of gas flow through the respective gas outlet openings.

It will be appreciated that the areas of the gas outlet openings may vary considerably, depending inter alia on the envisaged operating conditions in the suspension reactor, and the size and type of suspension reactor. Typically, the areas of the gas outlet openings will be in the range from 0.04 to 1600 mm².

According to a preferred embodiment, the gas inlet is a substantially vertical open-ended inner tubular member projecting into the hollow body, and, preferably, the gas inlet valve body is movably mounted at the top end of the open-ended inner tubular member. Thus, in this embodiment the gas inlet valve body is located inside the hollow body. Typically the gas sparger is designed such that the gas inlet valve body, when returning from the open position to the closed position, does not come into contact with suspension material from the suspension zone.

Preferably, the top end of the open-ended tubular member is located at a higher vertical position than the gas outlet opening(s). This ensures that a gas cap is created around at least the top end of the open-ended tubular member and the gas inlet valve body when, in operation, the gas inlet valve body returns from the open position to the closed position. This in turn ensures that the gas inlet valve body in the closed position, at least initially, does not come into contact with suspension material from the suspension zone.

Preferably, the hollow body is substantially cylindrical. In particular, the cylindrical hollow body comprises a cylindrical wall and a top cover. Preferably, the open-ended inner tubular member is arranged axially with the hollow body.

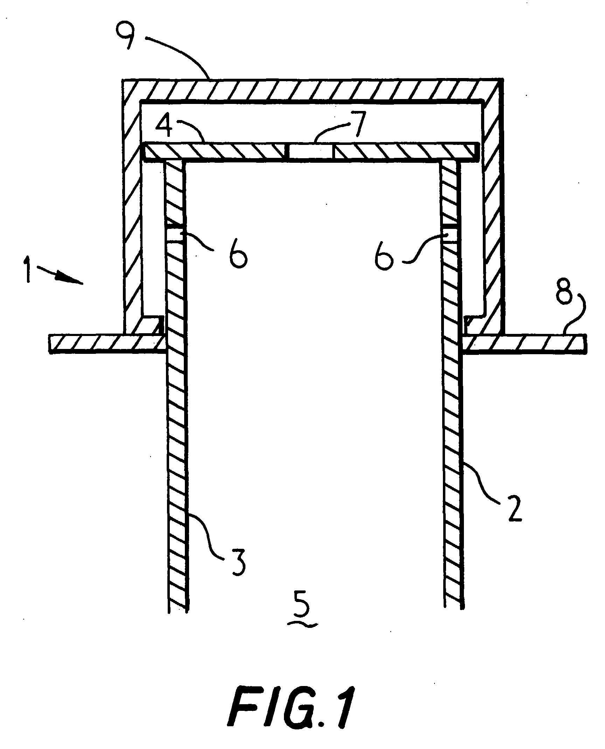

The invention will now be described in more detail by way of Example with reference to Figures 1 to 3.

Figure 1 schematically depicts a cross-section of an embodiment of the invention in which the gas inlet valve body surrounds at least part of the hollow body.

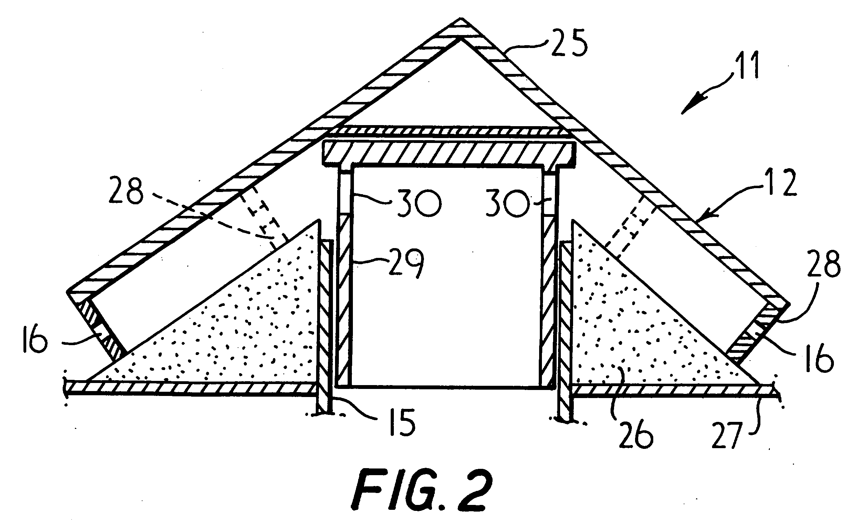

Figure 2 schematically depicts a cross-section of a preferred embodiment of the invention in which the gas inlet is a substantially vertical open-ended inner tubular member projecting into the hollow body and the gas inlet valve body is movably mounted at the top end of the open-ended tubular member.

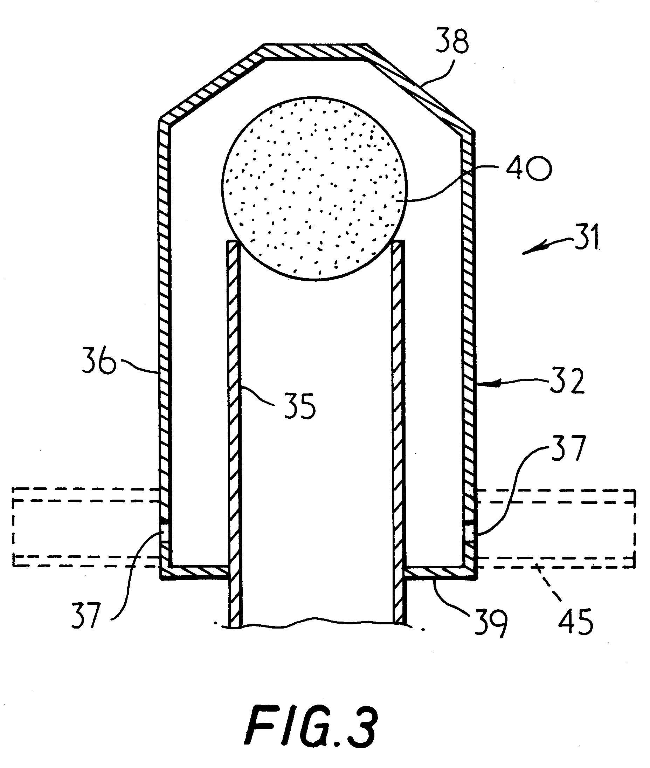

Figure 3 schematically depicts a cross-section of yet another preferred embodiment of the invention in which the gas inlet is a substantially vertical open-ended inner tubular member projecting into the hollow body and the gas inlet valve body is movably mounted at the top end of the open-ended tubular member.

Now reference is made to Figure 1, schematically depicting a cross-section of a gas sparger 1 according to the invention. The gas sparger 1 comprises a hollow body 2 having a cylindrical wall 3 and a top cover 4. The hollow body 2 has a gas inlet 5 and gas outlet openings 6 in cylindrical wall 3. The top cover 4 is provided with a hole 7. The hollow body 2 projects through and is connected to bottom plate 8.

The gas sparger 1 further comprises a gas inlet valve body in the form of a cylindrical cap 9. The cylindrical cap 9 can be displaced relative to the hollow body 2 by the action of gas supplied through the gas inlet 5 from a closed position (shown) to an open position (not shown).

In the closed position, the cylindrical cap 9 rests on the bottom plate 8. The cylindrical cap 9 is slideably arranged relative to the hollow body 2, along guide bars (not shown) connected to the bottom plate 8.

In operation, cylindrical cap 9 is lifted to the open position by the action of gas supplied through the gas inlet 5 and the hole 7 in the top cover 4, thus allowing outward flow of gas from the gas outlet openings 6 in the cylindrical wall 3.

It will be appreciated that according to a preferred embodiment the dimensions of the gas outlet openings 6 are kept within the ranges discussed above.

The area of the hole 7 in the top cover 4 is larger than the area of the gas outlet openings 6 in the cylindrical wall 3 to ensure a lower pressure drop over the hole 7 than over the gas outlet openings 6. If for some reason the gas pressure inside the hollow body becomes insufficient, the cylindrical cap 9 can no longer be maintained in the open position and will return to the closed position due to its own weight.

Figure 2 schematically depicts a preferred embodiment of a gas sparger 11 according to the invention comprising an hollow body 12 equipped with a gas inlet. The gas inlet is a substantially vertical open-ended inner tubular member, in the form of a cylindrical tube 15, projecting into the hollow body 12. The hollow body 12 comprises in this embodiment a conical top cover 25, a frusto-conical hollow bottom member 26 connected to a bottom plate 27, and a ring 28. The conical top cover 25 is vertically, in particular co-axially, spaced apart from the frusto-conical hollow bottom member 26 by the ring 28. The ring 28 is provided with gas outlet openings 16.

The gas sparger 11 is further provided with a gas inlet valve body in the form of a hollow piston 29 which is closed at the top, and is movably mounted at the top end of the open-ended tubular member (cylindrical tube 15). The hollow piston 29 is provided with holes 30 in the cylindrical sidewall of the hollow piston.

The hollow piston 29 can be displaced vertically relative to the hollow body 12 by the action of gas supplied through the cylindrical tube 15 between a closed position (not shown) and an open position (shown).

In operation, the gas inlet valve body in the form of the hollow piston 29 is lifted to the open position by the action of gas supplied through the cylindrical tube 15. Gas leaves the hollow piston 29 via holes 30 into the hollow body 12, that is the space provided between the conical top cover 25, ring 28 and the frusto-conical bottom member 26. Gas leaves the hollow body 12 via the gas outlet openings 16.

It will be appreciated that according to a preferred embodiment the dimensions of the gas outlet openings are kept within the ranges discussed above.

The areas of the holes 30 in hollow piston 29 are larger than the areas of the gas outlet openings 16 to ensure a lower pressure drop over holes 30 than over the gas outlet openings 16. If for some reason the gas pressure inside the hollow body 12 becomes insufficient, the hollow piston 29 can no longer be maintained in the open position and will return to the closed position due to its own weight.

The ring 28, containing gas outlet openings 16, is typically mounted substantially at the rim of the conical top cover 25. As outlined hereinbefore, to ensure homogeneous gas distribution, the dimensions of the gas outlet openings 16 are preferably chosen such that a substantial pressure drop can be maintained over the gas outlet openings 16. This, however, has the disadvantage that in operation the gas exits from the gas outlet openings 16 at a relatively high velocity. This in turn may induce significant solid particles attrition in the suspension zone, and a high wear rate of the gas sparger 12 and surrounding suspension reactor parts.

According to a further preferred embodiment of the invention, at least one gas outlet opening 16 is provided with an outwardly projecting nozzle (not shown) having an upstream orifice communicating with the gas outlet opening 16, and a downstream orifice which has a larger cross-sectional area than the area of the gas outlet opening 16. If the gas sparger 11 comprises two or more gas outlet openings 16, preferably each gas outlet opening is provided with an outwardly projecting nozzle.

In view of the larger cross-sectional area of the downstream orifice, the velocity of the gas exiting the gas sparger 11 is markedly reduced, leading to less wear and solid particles attrition.

In the embodiment of Figure 2, it is preferred to mount the ring 28 at some distance from the edge of the conical top cover 25, as shown by the dashed lines in Figure 2. In this embodiment the space between the conical top cover 25 and the frusto-conical bottom member 26, downstream of the ring 28 is divided into sections by radial partition plates (not shown) to provide separate outwardly projecting nozzles for each gas outlet opening 16.

Figure 3 schematically depicts yet another preferred embodiment of a gas sparger 31 comprising a cylindrical hollow body 32 equipped with a gas inlet. The gas inlet is a substantially vertical open-ended tubular member, in the form of a tube 35, projecting into the cylindrical hollow body 32.

The cylindrical hollow body 32 comprises in this embodiment a cylindrical wall 36 having gas outlet openings 37, a top cover 38, and a bottom plate 39. The tube 35 projects into the hollow body 32 through the bottom plate 39. The tube 35 is arranged axially, preferably co-axially, within the hollow body 32.

The gas sparger 31 is further equipped with a gas inlet valve body in the form of a ball 40 having a diameter which is larger than the inner diameter of the tube 35, and which ball 40 is arranged with play in the space between the top of the tube 35 and the top cover 38.

The ball 40 can be displaced vertically by the action of gas supplied through the gas inlet (tube 35) between a closed position (shown) and an open position (not shown).

During normal operation, the ball 40 is lifted from the tube 35 so as to form an opening by the action of gas supplied through the tube 35. In the open position, gas passes through the space between the ball 40 and the tube 35 into the hollow body 32. Gas leaves the hollow body 32 via the gas outlet openings 37.

The cross-sectional area of the opening provided by lifting of the ball 40 from the tube 35 is typically larger than the area of the gas outlet openings 37 to ensure a lower pressure drop relative to the gas outlet openings 37. The ball 40 will return to the closed position due to its own weight if the gas pressure becomes insufficient.

It will be appreciated that according to a preferred embodiment the dimensions of the gas outlet openings 37 are kept within the ranges discussed above.

As discussed with reference to Figure 2, according to a more preferred embodiment of the invention, each gas outlet opening 37 is provided with an outwardly projecting nozzle 45 to reduce the velocity of the gas leaving the gas sparger 31 and to avoid irregularities in gas distribution. A most suitable outwardly projecting nozzle is a tubular nozzle 45, as shown with dashed lines in Figure 3.

Preferably, for gas spargers comprising two or more gas outlet openings equipped with outwardly projecting nozzles, the angles of the axes of the outwardly projecting nozzles are between 45° and 135° from the vertical. More preferably, the axes of the projecting nozzles are directed substantially horizontal. If, however, the gas sparger comprises only one gas outlet opening, the axis of the outwardly projecting nozzle is preferably directed substantially upward. Typically, the gas sparger is arranged substantially vertical in the suspension reactor.

To ensure an even radial gas distribution, the hollow body of the gas sparger preferably contains from 3 to 18 gas outlet openings which are radially arranged.

According to a further aspect of the invention there is provided a suspension reactor which comprises a suspension zone which is equipped with gas inlet means, wherein the gas inlet means comprises at least one gas sparger as described hereinbefore.

Suspension reactors are known to those skilled in the art and include those reactors commonly referred to as ebullating reactors and slurry reactors. Suspension reactors contain a suspension zone in which, in operation, solid particles, in particular catalyst particles, are kept in suspension in a suspension liquid.

In particular, a suspension zone containing a suspension of solid particles, typically catalyst particles, having a relatively large average particle size of at least 200 µm, is referred to as an ebullating zone, whereas a zone containing a suspension of smaller solid particles, that is, having an average particle size of less than 200 µm, is typically referred to as a slurry zone.

The preferred average catalyst particle size for an ebullating zone ranges from 400 to 4000 µm.

The preferred average catalyst particle size for an slurry zone ranges from 1 to 100 µm, more preferably from 10 to 75 µm.

For the purposes of this specification, the term suspension zone is used to refer to both a slurry zone and an ebullating zone.

Preferably, the suspension zone contains primarily catalyst particles as solid particles. Other solid particles may however be present. Various options have e.g. been discussed in European patent application publication No. 0 450 859. More preferably, at least 90% of the solid particles are catalyst particles, in particular substantially all solid particles are catalyst particles.

The solid (catalyst) particles are kept in suspension in a suspension liquid. The suspension liquid serves as a heat-transfer medium. Examples of suitable suspension liquids have e.g. been listed in European patent application publication No. 0 450 860. Typically, the suspension liquid is a hydrocarbon mixture. Preferably, the suspension liquid is a hydrocarbon mixture obtained from a Fischer-Tropsch synthesis. It will be appreciated that if the process to be carried out in the suspension reactor is a Fischer-Tropsch synthesis, the suspension liquid is preferably the product of the said synthesis.

The solid (catalyst) particles may be kept in suspension by stirring with a mechanical device and/or by upward forces caused by rising gas bubbles and/or upward liquid flow. Preferably, the solid (catalyst) particles are kept in suspension by upward forces caused by rising gas bubbles and/or upward liquid flow.

The feed gas to be fed to the suspension reactor typically comprises one or more reactants. Examples of suitable feed gases are hydrogen, carbon monoxide, hydrogen/nitrogen mixtures, and hydrogen/carbon monoxide mixtures. Hydrogen/carbon monoxide mixtures are commonly referred to as synthesis gas.

The suspension zone typically contains heat-exchange means. Further, the suspension zone typically contains product outlet means and gas inlet means. According to this invention, the gas inlet means comprises at least one gas sparger as described hereinbefore.

Preferably, the suspension zone comprises from 3 to 3000 gas spargers as described hereinbefore.

Preferably, the gas sparger(s) is (are) installed at or near the bottom of the suspension zone, to ensure proper distribution of gas through the suspension zone and to prevent stagnant parts in the suspension zone.

Alternatively, the gas sparger(s) is (are) installed substantially in the middle part of the suspension zone instead of, or in addition to, at or near the bottom of the suspension zone.

Typically, the gas inlets of the gas spargers are connected in fluid communication to a gas supply tube. The gas supply tube is typically equipped with a gas supply valve. If the gas pressure upstream of the gas supply valve drops, e.g. in case of shut-down of the reactor or failure of the gas supply system, preferably the gas supply valve is closed. This ensures that upstream of the gas supply valve a relatively high gas pressure is maintained. This in turn ensures that the pressure differential across the gas inlet valve bodies, which will be in closed position, is relatively low. This places less constraints on the seals of the gas inlet valve bodies.

According to a particularly preferred embodiment of the invention, the suspension reactor is further equipped with an emergency gas supply system. Thus, preferably the suspension reactor contains means for feeding gas from an emergency gas supply source to the gas inlet(s) of the gas sparger(s). Typically, the means for feeding gas from an emergency gas supply source, that is the emergency gas supply system, comprises a branch in the gas supply tube downstream of the gas supply valve, which branch is equipped with a branch gas valve. Upstream of the said branch gas valve, the branch is connected in fluid communication to an emergency gas supply source, typically via a compressor.

In operation, the gas inlet valve bodies of the gas spargers are lifted to the open position by the action of gas supplied through the gas supply tube and the gas inlets. If the gas pressure drops, e.g. due to failure of the gas supply system, the gas inlet valve bodies will return to the closed position as set out in more detail hereinabove. The gas supply valve in the gas supply tube may be closed and the branch gas valve may be opened, either manually or automatically. This ensures that gas from the emergency gas supply source can flow to the gas inlets of the gas spargers.

According to one embodiment, the flow of gas from the emergency gas supply source is sufficient for the gas inlet valve bodies to return to the open position.

Alternatively, the flow of gas from the emergency gas supply source is not sufficient for the gas inlet valve bodies to return to the open position, but is sufficient to maintain a small positive gas pressure differential across the gas inlet valve body, thus allowing for some leakage of gas to the downstream side of the gas inlet valve body.

It will be appreciated that whilst reference is made to gas spargers and a gas supply tube, it is also possible, though not preferred, to have a single gas sparger and/or a plurality of gas supply tubes.

The gas from the emergency gas supply source is suitably one or more gases normally used as feed during operation of the suspension reactor. Thus, if during operation of the suspension reactor e.g. synthesis gas is used as feed, the gas from the emergency gas supply source is suitably hydrogen, carbon monoxide or mixtures thereof. Alternatively, the gas from the emergency gas supply source is substantially inert under the prevailing conditions in the suspension zone. Examples of suitable inert gases include nitrogen, methane and the noble gases.

A variety of processes may be carried out in a suspension reactor. In view of the excellent heat-transfer properties, it is particularly advantageous for carrying out highly exothermic processes, especially those involving one or more gaseous reactants.

Examples of suitable exothermic processes include those involving hydrogenation reactions, hydroformylation, alkanol synthesis, the preparation of aromatic uretanes and polyketones using carbon monoxide, Kölbel-Engelhardt synthesis, polyolefin synthesis, other polymerisation reactions and Fischer-Tropsch synthesis.

Thus, another aspect of the invention involves the use of a suspension reactor containing at least one gas sparger as described hereinbefore for carrying out an exothermic reaction involving one or more gaseous reactants.

Preferably, synthesis gas is used as gas feed to the suspension reactor. Therefore, according to yet another aspect of the invention there is provided a process for the preparation of organic compounds in a suspension reactor, which process comprises feeding synthesis gas through at least one gas sparger as described hereinbefore into a suspension zone containing a suspension of solid catalyst particles in suspension liquid; reacting the synthesis gas to organic compounds at synthesis conditions in the suspension zone; and withdrawing organic compounds from the suspension zone.

According to an especially preferred embodiment of the invention, the process for the preparation of organic compounds is a Fischer-Tropsch synthesis process.

The Fischer-Tropsch synthesis is well known to those skilled in the art and involves synthesis of hydrocarbons from a gaseous mixture of hydrogen and carbon monoxide, by contacting that mixture at reaction conditions with a Fischer-Tropsch catalyst.

Products of the Fischer-Tropsch synthesis may range from methane to heavy paraffinic waxes. Preferably, the production of methane is minimised and a substantial portion of the hydrocarbons produced have a carbon chain length of at least 5 carbon atoms. Preferably, the amount of C5+ hydrocarbons is at least 60 % by weight of the total product, more preferably, at least 70 % by weight, even more preferably at least 80 % by weight.

Fischer-Tropsch catalysts are known in the art, and typically include a Group VIII metal component, preferably cobalt, iron and/or ruthenium, more preferably cobalt. Typically, the catalysts comprise a catalyst carrier. The catalyst carrier is preferably porous, such as a porous inorganic refractory oxide, more preferably alumina, silica, titania, zirconia or mixtures thereof.

The optimum amount of catalytically active metal present on the carrier depends inter alia on the specific catalytically active metal. Typically, the amount of cobalt present in the catalyst may range from 1 to 100 parts by weight per 100 parts by weight of carrier material, preferably from 10 to 50 parts by weight per 100 parts by weight of carrier material.

The catalytically active metal may be present in the catalyst together with one or more metal promoters or co-catalysts. The promoters may be present as metals or as the metal oxide, depending upon the particular promoter concerned. Suitable promoters include oxides of metals from Groups IIA, IIIB, IVB, VB, VIB and/or VIIB of the Periodic Table, oxides of the lanthanides and/or the actinides. Preferably, the catalyst comprises at least one oxide of an element in Group IVB, VB and/or VIIB of the Periodic Table, in particular titanium, zirconium, manganese and/or vanadium. As an alternative or in addition to the metal oxide promoter, the catalyst may comprise a metal promoter selected from Groups VIIB and/or VIII of the Periodic Table. Preferred metal promoters include rhenium, platinum and palladium.

A most suitable catalyst comprises cobalt as the catalytically active metal and zirconium as a promoter. Another most suitable catalyst comprises cobalt as the catalytically active metal and manganese and/or vanadium as a promoter.

The promoter, if present in the catalyst, is typically present in an amount of from 0.1 to 60 parts by weight per 100 parts by weight of carrier material, preferably from 0.5 to 40 parts by weight per 100 parts by weight of carrier material. It will however be appreciated that the optimum amount of promoter may vary for the respective elements which act as promoter. If the catalyst comprises cobalt as the catalytically active metal and manganese and/or vanadium as promoter, the cobalt : (manganese + vanadium) atomic ratio is advantageously at least 12:1.

The Fischer-Tropsch synthesis is preferably carried out at a temperature in the range from 125 to 350 °C, more preferably 175 to 275 °C. The pressure preferably ranges from 5 to 150 bar abs., more preferably from 10 to 80 bar abs.

Hydrogen and carbon monoxide (synthesis gas) is typically fed to the suspension zone at a molar ratio in the range from 0.4 to 3.5. Preferably, the hydrogen to carbon monoxide molar ratio is in the range from 1.0 to 2.5.

The gaseous hourly space velocity may vary within wide ranges and is typically in the range from 500 to 10000 Nl/l/h.

## Claims

1. A gas sparger for feeding gas into the suspension zone of a suspension reactor, which sparger comprises a hollow body equipped with a gas inlet and having one or more gas outlet opening(s), and a gas inlet valve body which can be displaced relative to the hollow body by the action of gas supplied through the gas inlet from a closed position to an open position.

2. Gas sparger as claimed in claim 1, wherein the gas inlet is a substantially vertical open-ended inner tubular member projecting into the hollow body.

3. Gas sparger as claimed in claim 2, wherein the gas inlet valve body is movably mounted at the top end of the open-ended tubular member.

4. Gas sparger as claimed in claim 2 or 3, wherein the top end of the open-ended tubular member is located at a higher vertical position than the gas outlet opening(s).

5. Gas sparger as claimed in any one of the preceding claims, wherein the hollow body is substantially cylindrical.

6. Gas sparger as claimed in claim 5, wherein the cylindrical hollow body comprises a cylindrical wall and a top cover, and wherein the open-ended inner tubular member is arranged axially with the hollow body.

7. Gas sparger as claimed in any one of the preceding claims, wherein the dimensions of the gas outlet opening(s) (is) are such that, when the sparger is in use, the pressure drop over the gas outlet opening(s) is at least 10% of the average pressure drop between the bottom and the top of the suspension zone.

8. Gas sparger as claimed in claim 7, wherein the gas outlet opening(s) (has) have an area in the range from 0.04 to 1600 mm².

9. Gas sparger as claimed in claim 7 or 8, wherein at least one gas outlet opening is provided with an outwardly projecting nozzle having an upstream orifice which is in communication with the gas outlet opening, and a downstream orifice having a larger inner cross-sectional area than the area of the gas outlet opening.

10. Gas sparger as claimed in claim 9 comprising two or more gas outlet openings, wherein each gas outlet opening is provided with an outwardly projecting nozzle.

11. Gas sparger as claimed in claim 9 or 10 comprising two or more gas outlet openings, wherein the angles of the axes of the outwardly projecting nozzles are between 45° and 135° from the vertical.

12. Gas sparger as claimed in any one of the preceding claims, wherein the hollow body has from 3 to 18 gas outlet openings which are radially arranged.

13. Gas sparger substantially as described hereinbefore, with reference to Figures 1 to 3.

14. Suspension reactor which comprises a suspension zone which is equipped with gas inlet means, wherein the gas inlet means comprises at least one gas sparger as claimed in any one of the preceding claims.

15. Suspension reactor as claimed in claim 14, wherein the gas sparger(s) is (are) installed at or near the bottom of the suspension zone.

16. Suspension reactor as claimed in claim 14 or 15, containing means for feeding gas from an emergency gas supply source to the gas inlet(s) of the gas sparger(s).

17. Suspension reactor as described hereinbefore, with reference to the description.

18. Use of a suspension reactor as claimed in any one of claims 14 to 17 in a process for carrying out an exothermic reaction involving one or more gaseous reactants.

19. Process for the preparation of organic compounds in a suspension reactor, which process comprises feeding synthesis gas through at least one gas sparger as claimed in claims 1 to 13 into a suspension zone containing a suspension of solid catalyst particles in suspension liquid; reacting the synthesis gas to organic compounds at synthesis conditions in the suspension zone; and withdrawing organic compounds from the suspension zone.

20. Process for the preparation of organic compounds from synthesis gas as claimed in claim 19, wherein the process is a Fischer-Tropsch synthesis.
